# EUROPÄISCHE PATENTSCHRIFT

(11) **EP 0 393 233 B1**
(45) Veröffentlichungstag und Bekanntmachung des Hinweises auf die Patenterteilung: **01.02.1995**
(21) Anmeldenummer: 89112018.0
(22) Anmeldetag: 01.07.1989
(51) Int. Cl.: B60R 16/02

(54) **Signalübertragungssystem**
Signal transmitting system
Système de transmission de signaux

(30) Priorität: 15.04.1989 DE 3912439
(43) Veröffentlichungstag der Anmeldung: 24.10.1990
(73) Patentinhaber: Mannesmann VDO AG, 60326 Frankfurt (DE)
(72) Erfinder: Strobel, Henry, D-6231 Sulzbach/Ts. (DE); Wiese, Klaus, D-6231 Sulzbach/Ts. (DE)
(74) Vertreter: Klein, Thomas, Dipl.-Ing. (FH)

(56) Entgegenhaltungen:
- EP-A- 0 092 284
- WO-A-88/05390
- DE-A- 3 705 297
- FR-A- 2 437 038
- FR-A- 2 596 596
- PATENT ABSTRACTS OF JAPAN vol. 7, no. 94 (E-171)(1239) 20. April 1983 & JP-A-58 19 064 (SHINPO KOGYO) 20. April 1983

## Beschreibung

Die Erfindung betrifft ein Signalübertragungssystem, insbesondere zur Verwendung in Kraftfahrzeugen, mit mindestens einem Sender, der über eine Leitung mit einem Empfänger verbunden ist und mit einer den Sender speisenden Spannungsversorgungseinrichtung, wobei der Empfänger und die Spannungsversorgungseinrichtung am gleichen Ende derselben Leitung angeordnet sind, der Sender in Abhängigkeit von einem zu übertragenden Signal seine eigene Versorgungsspannung moduliert und der Empfänger die Modulation der Eingangsversorgungsspannung detektiert.

In modernen Kraftfahrzeugen gewinnt die Signalübertragung zwischen einzelnen Sendern, z. B. dem Füllstandsgeber im Kraftstofftank, dem Öldruckmesser im Motorgehäuse, Temperaturfühlern, Lichtfühlern zur Kontrolle des Scheinwerferzustandes etc., immer stärker an Bedeutung. Dazu werden in zunehmendem Maße Bus-Systeme verwendet, bei denen einige Sender Signale über einen Leitungsbus an einen oder mehrere Empfänger senden.

Dabei sind in der Bus-Leitung drei einzelne Leitungen nötig und zwar, für Versorgungsspannung, Masse und Signalspannung. Die Signalspannung kann dabei die gleiche Masseleitung wie die Versorgungsspannung benutzen. In Einzelfällen, wenn es auf die Qualität der Masse nicht so genau ankommt, läßt sich zwar aufgrund der Fahrzeugkarosserie, die eine für alle Bauteile gemeinsame Masse bildet, die Masseleitung einsparen, der verbleibende Verdrahtungs- und Leitungsaufwand ist aber immer noch recht hoch.

Aus JP-A-58 19 064 ist eine Übertragungseinrichtung bekannt, bei welcher ein Sender mit einem Empfänger über eine Leitung verbunden ist.

Der Sender wird von einer Spannungsversorgungseinrichtung gespeist. Empfänger und Spannungsversorgungseinrichtung sind dabei am gleichen Ende derselben Leitung angeordnet. Der Sender moduliert in Abhängigkeit von einem zu übertragenden Signal seine eigene Versorgungsspannung.
Mit dieser Lösung wird zwar der Leitungsaufwand verringert, eine Änderung der Versorgungsspannung aufgrund der Modulation kann aber eine ausreichende Versorgung des Senders nicht immer gewährleisten.
Es ist daher die Aufgabe der Erfindung, den Sender auch durch die modulierte Versorgungsspannung ausreichend zu versorgen.

Diese Aufgabe wird bei einem Signalübertragungssystem der eingangs genannten Art dadurch gelöst, daß der Sender seine Eingangsversorgungsspannung in Abhängigkeit von einem zu übertragenden Signal zwischen einem vorbestimmten ersten Wert und einem vorbestimmten zweiten Wert hin- und herschaltet, wobei diese Werte so wählbar sind, daß der Sender auch von der modulierten Eingangsversorgungsspannung ausreichend versorgt wird. Auf der Leitung existieren dann zwei klar definierte Spannungswerte, die sich um eine vorbestimmte Differenz unterscheiden. Der Empfänger kann diese beiden Werte leicht detektieren und weiterverarbeiten.

Der Leitungsaufwand wird im Vergleich zu den bekannten drei Leitungen um ein Drittel reduziert. Trotzdem können, wie bisher, Signale vom Sender an den Empfänger gesendet werden.

In einer bevorzugten Ausführungsform moduliert der Sender zur Übertragung von digitalen Signalen seine Eingangsversorgungsspannung impulsartig. Digitale Signale haben gegenüber der Verwendung von analogen Signalen den Vorteil, daß an die Qualität der Masseverbindung geringere Anforderungen gestellt werden. Deswegen kann bei digitalen Signalen die getrennte Masseleitung entfallen, wenn die einzelnen Komponenten des Übertragungssystems mit der Karosserie oder dem Gehäuse als Masse verbunden sind. Dies ermöglicht eine weitere Einsparung.

In einer bevorzugten Ausführungsform ist parallel zum Spannungseingang des Senders eine vom Sender gesteuerte Spannungsabsenkungseinrichtung angeordnet. Damit lassen sich herkömmliche Sender verwenden, die als Ausgangssignal eine Impulsfolge erzeugen. Diese Impulsfolge kann zur Steuerung der Spannungsabsenkungseinrichtung verwendet werden. Wenn z. B. das Ausgangssignal den Wert logisch Eins hat, wird die Eingangsversorgungsspannung auf ihrem vorbestimmten ersten Wert gehalten und wenn das Ausgangssignal des Senders den Wert logisch Null hat, wird die Eingangsversorgungsspannung auf den vorbestimmten zweiten Wert abgesenkt.

Dabei weist die Spannungsabsenkungseinrichtung vorteilhafterweise einen Schalter in Reihe mit einem Element mit konstantem Spannungsabfall auf. Der Schalter kann durch das Ausgangssignal des Senders betätigt werden. Wenn der Schalter geschlossen ist, ergibt sich auf der Leitung eine Spannung, die dem konstanten Spannungsabfall des Elements entspricht.

Bevorzugterweise ist das Element mit konstantem Spannungsabfall eine Zener-Diode und/oder der Schalter ein Halbleiterschalter. Wird der Schalter geschlossen, was bei einem Halbleiterschalter leicht durch Anlegen eines elektrischen Signals erreicht werden kann, so ergibt sich auf der Leitung die Zener-Spannung der Diode.

Mit Vorteil weist der Empfänger einen Komparator auf, der die Versorgungsspanung auf der Leitung mit einem vorbestimmten dritten Spannungswert vergleicht. Dies ergibt, insbesondere bei digitalen Daten, eine problemlose Auswertung, die relativ störsicher und einfach zu realisieren ist. Der Komparator ermittelt, ob die auf der Leitung vorhandene Spannung oberhalb oder unterhalb des vorbestimmten dritten Spannungswerts liegt. Da die auf der Leitung vorhandene Spannung die Eingangsversorgungsspannung des Senders ist, bewirkt jeder Änderung, die der Sender in der Eingangsversorgungsspannung bewirkt, auch einen Impuls am Komparatorausgang.

Dabei ist es von Vorteil, daß der Empfänger eine Auswerteeinrichtung aufweist, die das zeitliche Verhalten des Komparatorausgangssignals auswertet. Je nach Modulationsart des Senders muß natürlich auch die Auswertung der empfangenen Signale angepaßt werden. Der Sender kann beispielsweise eine Pulscodemodulation, eine Differenzpulscodemodulation, eine Pulsbreitenmodulation oder ähnliches durchführen. Entsprechend muß die Auswerteeinrichtung ausgelegt sein.

Vorteilhafterweise weist die Spannungsversorgungseinrichtung einen hohen Innenwiderstand auf. Der Empfänger kann dann, ohne weitere externe Beschaltung, die vom Sender ausgesendeten Signale direkt am Ausgang der Spannungsversorgungseinrichtung abgreifen. Eine andere Alternative ist es, eine Spannungsversorgungseinrichtung mit nahezu idealer Spannungsquelle zu verwenden und zwischen Spannungsversorgungseinrichtungsausgang und Leitungsbeginn einen Widerstand vorzusehen.

In einer bevorzugten Ausführungsform sind mehrere Sender am senderseitigen Ende der Leitung angeordnet, die zeitlich versetzt senden. Die Zuordnung der einzelnen Sender zu ihren Signalen erfolgt dabei über ein herkömmliches Multiplexverfahren. Dies ist insbesondere dann sinnvoll, wenn von verschiedenen Stellen Daten, beispielsweise Temperaturen, an einen Empfänger übertragen werden sollen, der dann beispielsweise eine Klimaanlage steuert. Bei mehreren Sendern tritt der Vorteil des erfindungsgemäßen Übertragungssystems besonders klar zu Tage, da auch dann, wenn gleichzeitig alle Sender einen Impuls senden, die Eingangsversorgungsspannung, d.h. die Spannung auf der Leitung, nie unterhalb des vorbestimmten zweiten Werts absinken und nie oberhalb des vorbestimmten ersten Werts ansteigen kann. Dadurch ergibt sich ein klar definierter, niedriger Stromverbrauch bei gesicherter Spannungsversorgung.

Die einzelnen Sender müssen, um im Multiplexverfahren betrieben werden zu können, zeitlich synchron laufen. Um die Anforderungen an die Dauer des synchronen Betriebs herabzusetzen, ist es von Vorteil, wenn wiederholt ein Startzeitpunkt durch die Spannungsversorgungseinrichtung durch eine Absenkung der Versorgungsspannung auf der Leitung unter einen vorbestimmten vierten Spannungswert festgelegt wird. Dies kann beispielsweise immer dann geschehen, wenn die mehreren Sender einmal in einem vorgegebenen Zyklus gesendet haben. Die Spannungsversorgungseinrichtung unterbricht dann kurzzeitig die Versorgungsspannung, was für die Sender einen neuen Startzeitpunkt bedeutet, von dem an sie wieder synchron laufen müssen. Die Genauigkeitsanforderungen für den synchronen Lauf werden dadurch herabgesetzt.

Die Erfindung wird im folgenden anhand von bevorzugten Ausführungsbeispielen in Verbindung mit der Zeichnung beschrieben. Darin zeigen:
- Fig. 1: ein erstes Signalübertragungssystem,
- Fig. 2: ein zweites Signalübertragungssystem und
- Fig. 3: die Modulation der Versorgungsspannung.

Ein Sender 1 ist über seinen Spannungseingang 2, an dem die Spannung U_{E} anliegt und in den der Strom I_{B} hineinfließt, mit einer Leitung 3 verbunden. Am anderen Ende der Leitung 3 ist eine Spannungsversorgungseinrichtung 4 angeordnet, die eine Spannungsquelle 5 und einen damit in Reihe geschalteten innenwiderstand 6 aufweist und am Ausgang 7 eine Spannung U_{Bus} erzeugt. Der Wert Rᵢ des Innenwiderstands 6 wird vorteilhafterweise relativ hoch gewählt, so daß eine "weiche" Spannungsquelle realisiert wird. Rᵢ kann in der Größenordnung von 500 Ohm liegen.

Am gleichen Ende wie die Spannungsversorgungseinrichtung 4 ist auch ein Empfänger 8 angeordnet, dem die Spannung U_{Bus} zugeführt wird. Diese Spannung U_{Bus} wird einem Eingang eines Komparators 9 zugeführt, während dem anderen Eingang des Komparators 9 eine Referenzspannung U_{ref} von einer Referenzspannungsquelle 10 zugeführt wird. Der Ausgang des Komparators 9 ist mit einer Auswerteeinrichtung 11 verbunden. Diese Auswerteeinrichtung 11 kann in nichtdargestellter Weise mit Steuerungseinrichtungen verbunden sein, die aufgrund der vom Sender 1 gesendeten Signale betätigt werden sollen.

Parallel zum Ausgang 2 des Senders 1 ist eine Spannungsabsenkungseinrichtung 12 angeordnet, die in Reihe einen Schalter 13 und eine Zener-Diode 14 aufweist. Der Schalter 13 wird dabei in Abhängigkeit von einem am Signalausgang 15 des Senders 1 anliegenden Signal gesteuert.

Eine Masseleitung ist im vorliegenden Fall nicht erforderlich und deswegen auch nicht eingezeichnet. Sender, Empfänger und Spannungsversorgung sind durch eine gemeinsame Masse miteinander verbunden, beispielsweise die Karosserie eines Fahrzeugs.

Der Sender ist Teil eines Sensors 16, der über nichtdargestellte Erfassungseinrichtungen physikalische Größen ermittelt, beispielsweise Temperatur, Füllstandshöhe des Kraftstoffs im Kraftstofftank, Öldruck oder ähnliches. Aus den erfaßten Größen erzeugt der Sensor 16 ein Signal, das durch den Sender 1 über die Leitung 3 an den Empfänger 8 gesendet werden soll. in Abhängigkeit von dem Signal am Ausgang 15 schließt oder öffnet der Schalter 13. Bei geöffnetem Schalter 13 wird die Spannung U_{E} ausschließlich vom Strom I_{B} am Spannungseingang 2 des Senders 1 bestimmt. Diese Spannung U_{E}, die gleich der Spannung U_{Bus} am anderen Ende der Leitung 3, d.h. am Ausgang 7 der Spannungsversorgungseinrichtung 4 ist, ergibt sich aus der Leerlaufspannung Uₒ der Spannungsquelle 5 abzüglich des am Innenwiderstand 6 durch den Strom I_{B} hervorgerufenen Spannungsabfall Uᵢ. Wird der Schalter 13 hingegen geschlossen, ist die Eingangsversorgungsspannung U_{E} gleich der an der Zenerdiode 14 abfallenden Zenerspannung U_{Z}. Eine entsprechende Spannung stellt sich am anderen Ende der Leitung am Ausgang 7 der Spannungsversorgung 4 ein. Der dazu nötige Spannungsabfall, d.h. die Differenz zwischen U_{O} und U_{Z} wird über einen verstärkten Stromfluß durch den innenwiderstand 6 hervorgerufen. Aus diesem Grund ist es von Vorteil, wenn die Spannungsversorung 4 "weich" ist, d.h. einen großen Innenwiderstand aufweist. Es ist natürlich auch möglich, zwischen dem Ausgang 7 der Spannungsversorgung 4 und dem Ende der Leitung 3, von dem der Komparator 9 des Empfängers 8 die Spannung U_{Bus} entnimmt, einen größeren Widerstand einzubauen.

Die Spannung U_{Bus}, die der Spannung U_{E} am Eingang des Senders 1 entspricht, wird nun dem Komparator 9 zugeführt, der sie mit der Spannung U_{ref} vergleicht. Überschreitet die Spannung U_{Bus} die Spannung U_{ref} erzeugt der Komparator beispielsweise ein positives Ausgangssignal, unterschreitet die Spannung U_{Bus} die Spannung U_{ref}, erzeugt der Komparator ein negatives Ausgangssignal. Die zeitliche Abfolge der Änderungen des Komparatorausgangs werden in der Auswerteeeinrichtung 11 erfaßt und ausgewertet. Die vom Sender 1 gesendete Information kann beispielsweise in der Länge der Zeiträume liegen, in der das Ausgangssignal des Komperators 9 positiv bzw. negativ ist. Natürlich ist es auch denkbar, daß der Sender 1 sein Ausgangssignal binär kodiert und die Auswerteeinrichtung 11 mit Hilfe eines entsprechenden Zählers die Information dekodiert.

Am senderseitigen Ende der Leitung 3 können weitere Sender 1′, 1˝ angeordnet sein, die in ihrem Aufbau und in ihrer Beschaltung mit einer Spannungsabsenkungseinrichtung 12 dem des Senders 1 entsprechen. Wenn alle Schalter 13 geöffnet sind, wird die Spannung U_{Bus} am Ausgang 7 der Spannungsversorgung 4 im wesentlichen durch die Summe der von den Sendern benötigten Ströme I_{B} bestimmt. Wenn alle Schalter 13 geschlossen sind, wird die Eingangsspannung maximal auf die Spannung U_{Z} der Zenerdioden 14 abgesenkt, so daß alle Sender 1, 1′ und 1˝ noch mit einer ausreichenden Spannung versorgt werden können.

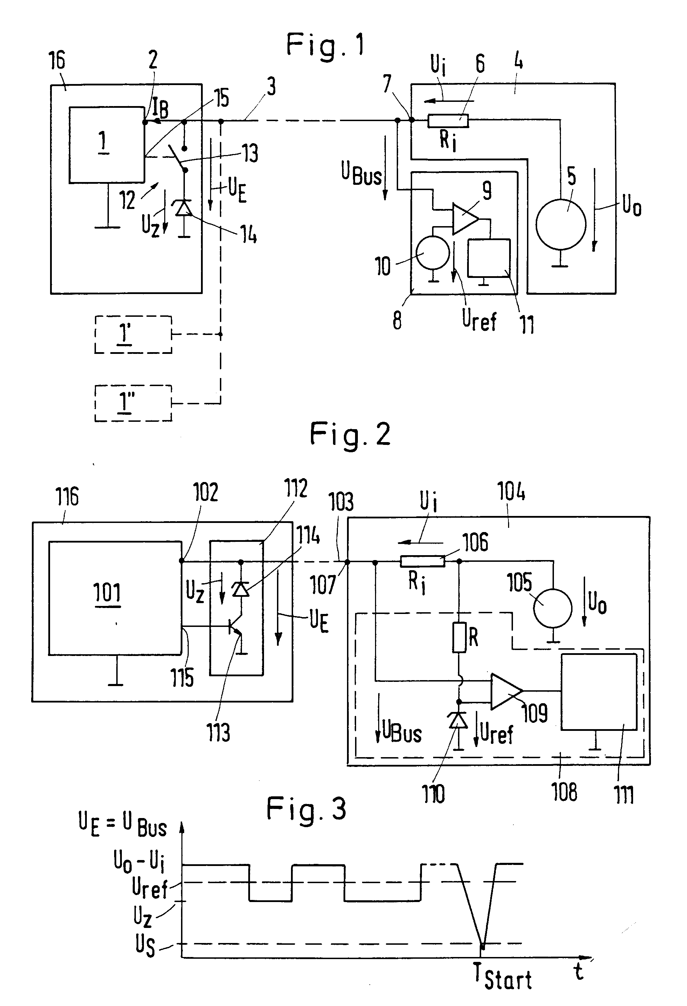

Um die einzelnen Sender unterscheiden zu können, können den Sendern in einem Zyklus feste Sendezeiten zugeordnet sein. Beispielsweise kann der Sender 1 im ersten Drittel, der Sender 1′ in einem zweiten Drittel und der Sender 1˝ in einem dritten Drittel des Zyklus senden. Dazu ist erforderlich, daß die Sender zumindest für die Dauer eines Zyklus annähernd synchron laufen. Zur Synchronisierung der Sender am Beginn eines Zyklus kann die Spannungsversorgung 4 ihre Ausgangsspannung unter einen Wert U_{S} (Fig. 3) absenken. Der Zeitpunkt, an dem die Eingangsversorgungsspanung U_{E} die Spannung U_{S} unterschreitet, ist der Zeitpunkt, ab dem die einzelnen Sender wieder erneut synchron laufen. Dieser Zeitpunkt wird, da die Spannungsabsenkung auch an den Empfänger 8 gelangt, auch der Auswerteeinrichtung 11 zugänglich gemacht.

Fig. 2 zeigt eine weitere Ausführungsform eines Übertragungssystems. Elemente, die denen der Fig. 1 entsprechen, sind mit um 100 erhöhten Bezugszeichen versehen. Der Sensor 116 unterscheidet sich von dem der Fig. 1 dadurch, daß die Spannungsabsenkungseinrichtung 112 einen Halbleiterschalter 113 in Form eines Transistors aufweist, dessen Basis mit dem Signalausgang 115 des Senders 101 verbunden ist. Der Emitter des Transistors 113 ist mit Masse verbunden, während zwischen dem Kollektor und der Leitung 103 die Zenerdiode 114 angeordnet ist. Wenn der Transistor aufgrund eines am Signalausgang 115 angelegten Signals durchgesteuert wird, wird die Eingangsversorgungssspannung U_{E} des Senders 101 auf den Wert U_{Z} abgesenkt.

Die Spannungsversorgungseinrichtung 104 unterscheidet sich von der Spannungsversorgungseinrichtung 4 der Fig. 1 dadurch, daß der Empfänger 108 in sie integriert ist. Die Referenzspannung U_{ref} wird mit Hilfe einer Zenerdiode 110 erzeugt, die in Reihe mit einem Widerstand R zwischen dem Ausgang der Spannungsquelle 105 und Masse geschaltet ist. Die Zenerspannung der Zenerdiode 110 ist vorteilhafterweise etwa in der Mitte zwischen U_{Z} und (U_{O}-Uᵢ) gewählt. Wenn viele Sender parallel am anderen Ende der Leitung 103 angeschlossen sind, kann es vorteilhaft sein, die Zenerspannung U_{ref} der Zenerdiode 110 näher an die Zenerspannung U_{Z} der Zenerdiode 114 zu rücken.

Das Signalübertragungssystem findet vorteilhaft Anwendung in Kraftfahrzeugen. Seine Anwendung ist jedoch nicht auf Kraftfahrzeuge beschränkt. Es kann überall dort zum Einsatz kommen, wo Leitungen eingespart werden sollen, sei es aus Gewichtsgründen, sei es aus Gründen der Einsparung von Arbeit beim Verdrahten.

## Patentansprüche

1. Signalübertragungssystem, insbesondere zur Verwendung in Kraftfahrzeugen, mit mindestens einem Sender (1, 101), der über eine Leitung (3, 103) mit einem Empfänger (8, 108) verbunden ist und mit einer den Sender (1, 101) speisenden Spannungsversorgungseinrichtung (4, 104), wobei der Empfänger (8, 108) und die Spannungsversorgungseinrichtung (4, 104) am gleichen Ende derselben Leitung (3, 103) angeordnet sind, der Sender (1, 101) in Abhängigkeit von einem zu übertragenden Signal seine eigene Versorgungsspannung (U_{E}) der Leitung (3, 103) (Eingangsversorgungsspannung) moduliert und der Empfänger (8, 108) die Modulation der Eingangsversorgungsspannung (U_{E}) detektiert, dadurch gekennzeichnet, daß der Sender (1) seine Eingangsversorgungsspannung (U_{E}) in Abhängigkeit von einem zu übertragenden Signal zwischen einem vorbestimmten ersten Wert (U_{O}-Uᵢ) und einem vorbestimmten zweiten Wert (U_{z}) hin- und herschaltet, die so wählbar sind, daß der Sender (1) auch von der modulierten Eingangsversorgungsspannung (U_{E}) ausreichend versorgt wird.

2. Signalübertragungssystem nach Anspruch 1, dadurch gekennzeichnet, daß der Sender (1, 101) zur Übertragung von digitalen Signalen seine Eingangsversorgungsspannung (U_{E}) impulsartig moduliert.

3. Signalübertragungssystem nach Anspruch 1 oder 2, dadurch gekennzeichnet, daß parallel zum Spannungseingang (2, 102) des Senders (1, 101) eine vom Sender gesteuerte Spannungsabsenkungseinrichtung (12, 112) angeordnet ist.

4. Signalübertragungssystem nach Anspruch 3, dadurch gekennzeichnet, daß die Spannungsabsenkungseinrichtung (12, 112) einen Schalter (13, 113) in Reihe mit einem Element (14, 114) mit konstantem Spannungsabfall aufweist.

5. Signalübertragungssystem nach Anspruch 4, dadurch gekennzeichnet, daß das Element mit konstantem Spannungsabfall eine Zener-Diode (14, 114) ist und/oder daß der Schalter ein Halbleiterschalter (113) ist.

6. Signalübertragungssystem nach einem der Ansprüche 2 bis 5, dadurch gekennzeichnet, ddaß der Empfänger einen Komparator (9) aufweist, der die Versorgungsspannung (U_{BUS}) auf der Leitung (3,103) mit einem vorbestimmten dritten Spannungswert (U_{ref}) vergleicht.

7. Signalübertragungssystem nach Anspruch 6, dadurch gekennzeichnet, daß der Empfänger (8, 108) eine Auswerteeinrichtung (11, 111) aufweist, die das zeitliche Verhalten des Komparatorausgangssignals auswertet.

8. Signalübertragungssystem nach einem der Ansprüche 1 bis 7, dadurch gekennzeichnet, daß die Spannungsversorgungseinrichtung (4, 104) einen hohen Innenwiderstand (6, 106) aufweist.

9. Signalübertragungssystem nach einem der Ansprüche 1 bis 8, dadurch gekennzeichnet, daß mehrere Sender (1, 1', 1'') am senderseitigen Ende der Leitung (3) angeordnet sind, die zeitlich versetzt senden.

10. Signalübertragungssystem nach Anspruch 9, dadurch gekennzeichnet, daß der Startzeitpunkt (T_{Start}) durch die Spannungsversorgungseinrichtung (4, 104) durch eine Absenkung der Versorgungsspannung (U_{E}) auf der Leitung (3, 103) unter einen vorbestimmten vierten Spannungswert (U_{S}) festgelegt wird.

## Claims

1. A signal transmission system, particularly for use in motor vehicles, having at least one transmitter (1, 101) which is connected via a line (3, 103) to a receiver (8, 108), and having a voltage supply device (4, 104) supplying the transmitter (1, 101), wherein the receiver (8, 108) and the voltage supply device (4, 104) are disposed at the same end of the same line (3, 103), the transmitter (1, 101) modulates its own voltage supply (U_{E}) from the line (3, 103) (input supply voltage) depending on a signal to be transmitted, and the receiver (8, 108) detects the modulation of the input supply voltage (U_{E}), characterised in that the transmitter (1) switches its input supply voltage (U_{E}) to and fro depending on a signal to be transmitted between a predetermined first value (U_{O} - Uᵢ) and a predetermined second value (U_{z}) which can be selected so that the transmitter (1) is also supplied satisfactorily by the modulated input supply voltage (U_{E}).

2. A signal transmission system according to claim 1, characterised in that the transmitter (1, 101) modulates its input supply voltage (U_{E}) in a pulse-like manner for the transmission of digital signals.

3. A signal transmission system according to claim 1 or 2, characterised in that a voltage reduction device (12, 112) controlled by the transmitter is disposed in parallel with the voltage input (2, 102) of the transmitter (1, 101).

4. A signal transmission system according to claim 3, characterised in that the voltage reduction device (12, 112) comprises a switch (13, 113) in series with an element (14, 114) with a constant voltage drop.

5. A signal transmission system according to claim 4, characterised in that the element with the constant voltage drop is a Zener diode (14, 114) and/or that the switch is a semiconductor switch (113).

6. A signal transmission system according to any one of claims 2 to 5, characterised in that the receiver comprises a comparator (9) which compares the supply voltage (U_{BUS}) in the line (3, 103) with a predetermined third voltage value (U_{ref}).

7. A signal transmission system according to claim 6, characterised in that the receiver (8, 108) has an evaluation device (11, 111) which evaluates the chronological behaviour of the comparator output signal.

8. A signal transmission system according to any one of claims 1 to 7, characterised in that the voltage supply device (4, 104) has a high internal resistance (6, 106).

9. A signal transmission system according to any one of claims 1 to 8, characterised in that a plurality of transmitters (1, 1',1''), which transmit in a chronologically displaced manner, is disposed at the transmitter end of the line (3).

10. A signal transmission system according to claim 9, characterised in that the start time (T_{Start}) is determined by the voltage supply device (4, 104) by a drop of the supply voltage (U_{E}) in the line (3, 103) at a predetermined fourth voltage value (U_{S}).

## Revendications

1. Système de transmission de signaux, destiné en particulier à être utilisé dans des véhicules automobiles, comprenant au moins un émetteur (1, 101) relié par une ligne (3, 103) à un récepteur (8, 108) et un dispositif d'alimentation (4, 104) alimentant l'émetteur (1, 101), système dans lequel le récepteur (8, 108) et le dispositif d'alimentation (4, 104) sont placés à la même extrémité de la même ligne (3, 103), l'émetteur (1, 101) module sa propre tension d'alimentation (U_{E}) de la ligne (3, 103) (tension d'alimentation d'entrée) en fonction d'un signal à transmettre et le récepteur (8, 108) détecte la modulation de la tension d'alimentation d'entrée (U_{E}), caractérisé en ce que l'émetteur (1) commute sa tension d'alimentation d'entrée (U_{E}) alternativement, en fonction d'un signal à transmettre, entre une première valeur (U_{O}-Uᵢ) prédéterminée et une deuxième valeur (U_{z}) prédéterminée qui peuvent être choisies de manière que l'émetteur (1) soit également alimenté suffisamment par la tension d'alimentation d'entrée (U_{E}) modulée.

2. Système de transmission de signaux selon la revendication 1, caractérisé en ce que l'émetteur (1, 101) module sa tension d'alimentation d'entrée (U_{E}) par impulsions pour la transmission de signaux numériques.

3. Système de transmission de signaux selon la revendication 1 ou 2, caractérisé en ce qu'un dispositif abaisseur de tension (12, 112), piloté par l'émetteur, est monté en parallèle avec l'entrée de tension (2, 102) de l'émetteur (1, 101).

4. Système de transmission de signaux selon la revendication 3, caractérisé en ce que le dispositif abaisseur de tension (12, 112) comporte un interrupteur (13, 113) en série avec un élément (14, 114) produisant une chute de tension constante.

5. Système de transmission de signaux selon la revendication 4, caractérisé en ce que l'élément produisant la chute de tension constante est une diode Zener (14, 114) et/ou que l'interrupteur est un interrupteur à semi-conducteur (113).

6. Système de transmission de signaux selon une des revendications 2 à 5, caractérisé en ce que le récepteur comporte un comparateur (9) qui compare la tension d'alimentation (U_{BUS}) sur la ligne (3, 103) avec une troisième valeur de tension (U_{ref}) prédéterminée.

7. Système de transmission de signaux selon la revendication 6, caractérisé en ce que le récepteur (8, 108) comporte un dispositif d'exploitation (11, 111) qui exploite le comportement temporel du signal de sortie du comparateur.

8. Système de transmission de signaux selon une des revendications 1 à 7, caractérisé en ce que le dispositif d'alimentation (4, 104) présente une haute résistance interne (6, 106).

9. Système de transmission de signaux selon une des revendications 1 à 8, caractérisé en ce que plusieurs émetteurs (1, 1', 1''), mutuellement décalés dans le temps, sont placés côté extrémité d'émetteur de la ligne (3).

10. Système de transmission de signaux selon la revendication 9, caractérisé en ce que l'instant de départ (T_{départ}) est fixé par le dispositif d'alimentation (4, 104), au moyen d'un abaissement de la tension d'alimentation (U_{E}) sur la ligne (3, 103) au-dessous d'une quatrième valeur de tension (U_{S}) prédéterminée.
